# EUROPEAN PATENT SPECIFICATION

(11) **EP 4 394 279 B1**
(45) Date of publication and mention of the grant of the patent: **03.06.2026**
(21) Application number: 23213948.5
(22) Date of filing: 04.12.2023
(51) Int. Cl.: F25B 21/02

(54) **HEATING, VENTILATION, AND AIR CONDITIONING SYSTEMS WITH THERMOELECTRIC GENERATOR**
HEIZ-, LÜFTUNGS- UND KLIMAANLAGENSYSTEME MIT THERMOELEKTRISCHEM GENERATOR
SYSTÈMES DE CHAUFFAGE, VENTILATION ET CLIMATISATION AVEC GÉNÉRATEUR THERMOÉLECTRIQUE

(30) Priority: 28.12.2022 US 202218147090
(43) Date of publication of application: 03.07.2024
(73) Proprietor: Honeywell International Inc., Charlotte, NC 28202 (US)
(72) Inventor: BERGMAN, Kevin, Charlotte, 28202 (US)
(74) Representative: Ingrassia, Fisher & Lorenz UK Ltd.

(56) References cited:
- JP-A- 2020 089 049
- US-A1- 2010 288 324
- US-B1- 10 323 866

## Description

### TECHNICAL FIELD

The present invention generally relates to heating, ventilation, and air conditioning systems, and more particularly relates to heating, ventilation, and air conditioning systems with thermoelectric generators.

### BACKGROUND

Generally, heating, ventilation, and air conditioning ("HVAC") systems are used to regulate temperature within an enclosed area, such as a building, vehicle, etc. In the example of HVAC systems for a vehicle, such as an aircraft, rotorcraft, automobile, train, etc., the components associated with the HVAC system may add additional weight to the vehicle. Further, the HVAC system may consume a large quantity of electrical energy to maintain cool temperatures while the vehicle is stationary. In certain instances, the consumption of electrical energy by the HVAC system may result in a reduction of range of the batteries associated with the vehicle.

Document JP 2020 089049 A discloses a heating, ventilation, and air conditioning system comprising a compressor, a throttling valve, a heat exchanger and also a first thermoelectric generator.

Accordingly, it is desirable to provide a heating, ventilation, and air conditioning system with a thermoelectric generator that has a reduced weight, and a reduced consumption of electrical energy due to the electrical energy generated by the thermoelectric generator. Furthermore, other desirable features and characteristics of the present invention will become apparent from the subsequent detailed description and the appended claims, taken in conjunction with the accompanying drawings and the foregoing technical field and background.

### SUMMARY

According to the present invention the above objective is solved by the features of claim 1. Preferred embodiments are defined in the dependent claims. According to various embodiments, provided is a heating, ventilation, and air conditioning system. The heating, ventilation, and air conditioning system includes an evaporator configured to provide a working fluid in a gaseous state at a first temperature range and a first pressure, and a compressor downstream from the evaporator. The compressor is configured to provide the working fluid in the gaseous state at a second temperature range and a second pressure, and the second temperature range is greater than the first temperature range and the second pressure greater than the first pressure. The heating, ventilation, and air conditioning system includes a first thermoelectric generator arranged between the evaporator and the compressor. A first end of the first thermoelectric generator is configured to receive the working fluid from the evaporator. The first thermoelectric generator has a second end opposite the first end, and the second end is configured to receive the working fluid from the compressor. The first thermoelectric generator is configured to generate electrical energy based on a temperature difference between the first end and the second end.

The heating, ventilation, and air conditioning system includes a throttling valve downstream of the first thermoelectric generator in a direction of a flow of the working fluid through the heating, ventilation, and air conditioning system, and the throttling valve is configured to receive the working fluid in a third temperature range, and the third temperature range is less than the second temperature range. The throttling valve is fluidly coupled to the evaporator so as to be upstream from the evaporator in the direction of the flow of the working fluid through the heating, ventilation, and air conditioning system. The heating, ventilation, and air conditioning system includes a heat exchanger having a first tube system and a second tube system. The first tube system is configured to receive the working fluid from the evaporator, the second tube system is configured to receive the working fluid from the compressor, and the first thermoelectric generator is coupled between the first tube system and the second tube system. The first tube system includes a first inlet configured to be fluidly coupled to the evaporator to receive the working fluid from the evaporator, a first outlet configured to be fluidly coupled to the compressor to provide the working fluid to the compressor and a first tube that connects the first inlet to the first outlet, and the first thermoelectric generator is coupled about an outer tube perimeter of the first tube. The second tube system includes an inner perimeter tube spaced apart from an outer perimeter tube to define a channel, the channel is defined to extend from a second inlet to a second outlet, the second inlet is configured to be fluidly coupled to the compressor to receive the working fluid, the second outlet is configured to be coupled to a throttling valve and the inner perimeter tube surrounds the first thermoelectric generator. The heating, ventilation, and air conditioning system includes a second thermoelectric generator coupled to an outer perimeter of the outer perimeter tube of the second tube system. The heating, ventilation, and air conditioning system includes an outer exchanger housing disposed about the second thermoelectric generator. The outer exchanger housing includes at least one fin structure. The heating, ventilation, and air conditioning system includes a blower configured to direct ambient air over the outer exchanger housing. The first tube system includes a first helical coiled tube, and the second tube system includes a second helical coiled tube, and the first thermoelectric generator is coupled about the first helical coiled tube. The first tube system includes a first serpentine coiled tube, and the second tube system includes a second serpentine coiled tube, and the first thermoelectric generator is coupled about the second serpentine coiled tube. The heating, ventilation, and air conditioning system including a heat exchanger having a first tube system and a second shell system, the first tube system including a plurality of first tubes configured to receive the working fluid from the evaporator, the second shell system configured to receive the working fluid from the compressor and to substantially surround the plurality of first tubes, and the first thermoelectric generator includes a plurality of first thermoelectric generators, with each of the plurality of first thermoelectric generators coupled about a respective one of the plurality of first tubes. The heating, ventilation, and air conditioning system includes a heat exchanger having a first inlet upstream from a first outlet, a second inlet upstream from a second outlet, the first inlet is configured to be directly fluidly coupled to the evaporator, the first outlet is configured to be directly fluidly coupled to the compressor, the second inlet is configured to be directly fluidly coupled to the compressor, and the second outlet is configured to be directly fluidly coupled to a throttling valve.

Also provided is a heating, ventilation, and air conditioning system. The heating, ventilation, and air conditioning system includes an evaporator configured to provide a working fluid in a gaseous state at a first temperature range and a first pressure, and a compressor downstream from the evaporator and configured to provide the working fluid in the gaseous state at a second temperature range and a second pressure. The second temperature range is greater than the first temperature range and the second pressure is greater than the first pressure. The heating, ventilation, and air conditioning system includes a heat exchanger having a first tube system configured to receive the working fluid from the evaporator and a second tube system configured to receive the working fluid from the compressor such that a temperature difference exists between the first tube system and the second tube system. The heating, ventilation, and air conditioning system includes a first thermoelectric generator arranged between the first tube system and the second tube system, and the first thermoelectric generator is configured to generate electrical energy based on the temperature difference.

The heating, ventilation, and air conditioning system includes a throttling valve downstream of the second tube system of the heat exchanger. The throttling valve is fluidly coupled to the evaporator so as to be upstream from the evaporator, the throttling valve is configured to receive the working fluid in a third temperature range from the second tube system, and the third temperature range is less than the second temperature range. The first tube system includes a first inlet configured to be fluidly coupled to the evaporator to receive the working fluid from the evaporator, a first outlet configured to be fluidly coupled to the compressor to provide the working fluid to the compressor, and a first tube that connects the first inlet to the first outlet, and the first thermoelectric generator is coupled about an outer tube perimeter of the first tube. The second tube system includes an inner perimeter tube spaced apart from an outer perimeter tube to define a channel, the channel is defined to extend from a second inlet to a second outlet, the second inlet is configured to be fluidly coupled to the compressor to receive the working fluid, the second outlet is configured to be coupled to a throttling valve and the inner perimeter tube surrounds the first thermoelectric generator. The heating, ventilation, and air conditioning system includes a second thermoelectric generator coupled to an outer perimeter of the outer perimeter tube. The heating, ventilation, and air conditioning system includes an outer exchanger housing disposed about the second thermoelectric generator and the outer exchanger housing includes at least one fin structure.

### DESCRIPTION OF THE DRAWINGS

The exemplary embodiments will hereinafter be described in conjunction with the following drawing figures, wherein like numerals denote like elements, and wherein:
FIG. 1 is a simplified schematic illustration of a heating, ventilation, and air conditioning ("HVAC") system associated with a vehicle in accordance with the various teachings of the present invention;
FIG. 2 is a perspective partially cross-sectional detail view of a heat exchanger associated with the HVAC system of FIG. 1, taken from the perspective of line 2-2 in FIG. 1;
FIG. 3 is a cross-sectional view of the heat exchanger of FIG. 2, taken along line 3-3 of FIG. 2;
FIG. 4 is a perspective view of another exemplary heat exchanger for use with the HVAC system of FIG. 1 in accordance with the various teachings of the present invention;
FIG. 5 is a cross-sectional view of the heat exchanger of FIG. 4, taken along line 5-5 of FIG. 4;
FIG. 6 is a perspective view of another exemplary heat exchanger for use with the HVAC system of FIG. 1 in accordance with the various teachings of the present invention;
FIG. 7 is a detail cross-sectional view of the heat exchanger of FIG. 6, taken at 7 of FIG. 6;
FIG. 8 is a perspective view of another exemplary heat exchanger for use with the HVAC system of FIG. 1 in accordance with the various teachings of the present invention;
FIG. 9 is a detail cross-sectional view of the heat exchanger of FIG. 8, taken at 9 of FIG. 8;
FIG. 10 is a cross-sectional view of another exemplary heat exchanger for use with the HVAC system of FIG. 1 in accordance with the various teachings of the present invention; and
FIG. 11 is a cross-sectional view of another exemplary heat exchanger for use with the HVAC system of FIG. 1 in accordance with the various teachings of the present invention.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. In addition, those skilled in the art will appreciate that embodiments of the present disclosure may be practiced in conjunction with any type of heating, ventilation, and air conditioning system, and the use of the heating, ventilation, and air conditioning system with a vehicle described herein is merely one exemplary embodiment according to the present disclosure. In addition, while the heating, ventilation, and air conditioning system is described herein as being used onboard a vehicle, such as such as a bus, motorcycle, train, motor vehicle, marine vessel, business jet, turboprop aircraft, small helicopter or mid-size helicopter, military vehicles (e.g., M1 Tank, Joint Light Tactical Vehicle, Paladin, etc.), mobile command posts, mobile medical facilities, and the like, the various teachings of the present disclosure can be used in other applications. Further, it should be noted that many alternative or additional functional relationships or physical connections may be present in an embodiment of the present disclosure. In addition, while the figures shown herein depict an example with certain arrangements of elements, additional intervening elements, devices, features, or components may be present in an actual embodiment. It should also be understood that the drawings are merely illustrative and may not be drawn to scale.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 10% to account for manufacturing tolerances. Also, as used herein, the term "about" denotes within 10% to account for manufacturing tolerances.

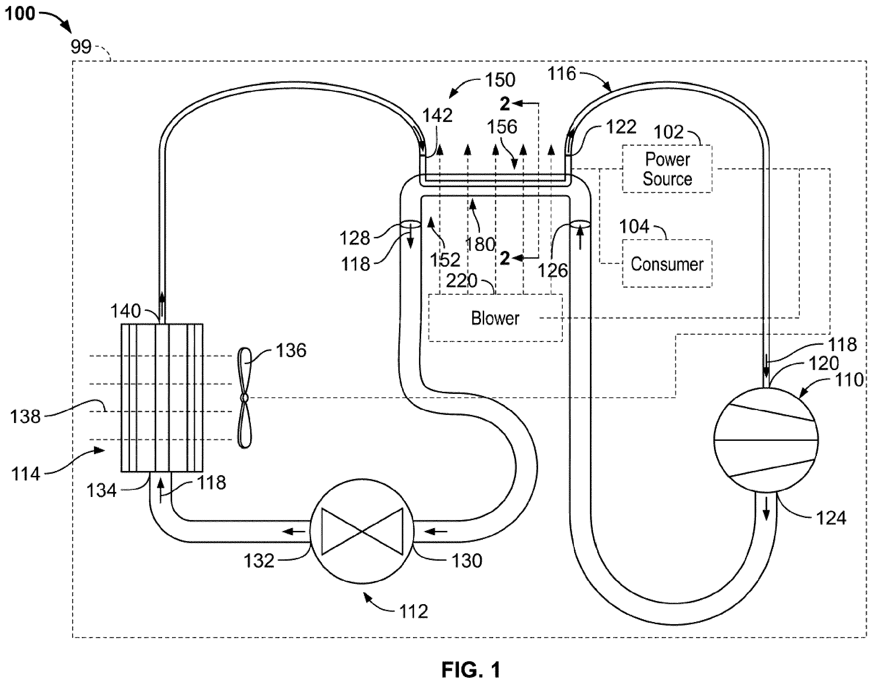

With reference to FIG. 1, a schematic illustration of a heating, ventilation, and air conditioning system or HVAC system 100 is shown. In one example, the HVAC system 100 is installed on a vehicle 99. As will be discussed, the HVAC system 100 reduces a weight associated with a typical heating, ventilation, and air conditioning system as the HVAC system 100 does not include a condenser. By eliminating the condenser, the HVAC system 100 has a reduced weight and complexity. In addition, the HVAC system 100 generates electrical energy during the operation of the HVAC system 100, which offsets a demand the HVAC system 100 may place on a power source 102 associated with the vehicle 99, such as one or more batteries. The electrical energy generated by the HVAC system 100 may also be stored by the power source 102, and the power source 102 may be charged by the HVAC system 100. Alternatively, the HVAC system 100 may be electrically coupled to a downstream consumer of the vehicle 99, such as a cabin lighting system, entertainment system, etc. Thus, generally, the HVAC system 100 is in electrical communication with the power source 102, and optionally, a downstream consumer 104 to supply electrical energy to the power source 102 and/or the downstream consumer 104.

With continued reference to FIG. 1, in this example, the HVAC system 100 includes a compressor 110, a throttling valve 112, an evaporator 114 and a heat exchanger 116. Although not illustrated herein, a housing may enclose all or a portion of the HVAC system 100. Generally, a single working fluid 118 is contained within and employed by the HVAC system 100. The compressor 110, the throttling valve 112, the evaporator 114 and the heat exchanger 116 may be fluidly coupled together or in fluid communication as described below via one or more conduits, hoses, pipes, etc. and the associated fittings that enable the working fluid 118 to flow through the HVAC system 100. In one example, the working fluid 118 is a refrigerant, including, but not limited to refrigerant 134a.

The compressor 110 is in fluid communication with the heat exchanger 116. In this example, the compressor 110 includes a compressor inlet 120 fluidly coupled to or in fluid communication with a first, cold outlet 122 of the heat exchanger 116 such that the compressor 110 is downstream from the cold outlet 122 of the heat exchanger 116. The compressor 110 also includes a compressor outlet 124 fluidly coupled to or in fluid communication with a second, hot inlet 126 of the heat exchanger 116 such that the compressor 110 is upstream from the hot inlet 126 of the heat exchanger 116. Generally, the compressor 110 receives the working fluid 118 as a low pressure gas from the cold outlet 122 of the heat exchanger 116. The working fluid 118 is in a gaseous state at the compressor inlet 120. In one example, the working fluid 118 has a fourth pressure at the cold outlet 122 of the heat exchanger 116 of about 130 kilopascal (kPa) to about 140 kilopascal (kPa). The working fluid 118 at the cold outlet 122 of the heat exchanger 116 has a fourth temperature, and in this example, the fourth temperature range is about negative 10 degrees Celsius to about negative 30 degrees Celsius.

The compressor 110 raises a pressure and a temperature of the working fluid 118 received from the cold outlet 122 at the compressor inlet 120 to generate a high pressure superheated gas. The compressor 110 comprises any suitable compressor for raising the pressure and the temperature of the working fluid 118, including, but not limited to a positive displacement compressor, a centrifugal compressor, an axial compressor, etc. In one example, the working fluid 118 has a second pressure at the compressor outlet 124 of about 1 megapascal (MPa). The working fluid 118 at the compressor outlet 124 has a second temperature range, and in this example, the second temperature range is about 65 degrees Celsius to about 75 degrees Celsius. The second temperature range is greater than the fourth temperature range. The compressor 110 directs the working fluid 118 in the second temperature range and the second pressure to the hot inlet 126 of the heat exchanger 116. The working fluid 118 is in the gaseous state at the compressor outlet 124. Thus, at the hot inlet, the working fluid 118 has the second temperature range and the second pressure.

The throttling valve 112 is fluidly coupled to or in fluid communication with a second, hot outlet 128 of the heat exchanger 116. The throttling valve 112 receives the working fluid 118 from the hot outlet 128 at a throttling valve inlet 130. Generally, the throttling valve 112 receives the working fluid 118 as a high pressure cooled liquid from the hot outlet 128 of the heat exchanger 116. In one example, the working fluid 118 has a third pressure at the hot outlet 128 of the heat exchanger 116 of about 1 megapascal (MPa). The working fluid 118 at the hot outlet 128 of the heat exchanger 116 has a third temperature range, and in this example, the third temperature range is about 25 degrees Celsius to about 35 degrees Celsius. The working fluid 118 at the hot outlet 128 is in the liquid state. The throttling valve 112 reduces a pressure and a temperature of the working fluid 118 as the working fluid 118 passes through the throttling valve 112 from the throttling valve inlet 130 to a throttling valve outlet 132. In one example, the throttling valve 112 includes, but is not limited to, a capillary tube, an automatic throttling valve, a thermostatic expansion valve, a float valve, etc. Generally, the working fluid 118 has a first pressure of about 130 kilopascal (kPa) to about 140 kilopascal (kPa) at the throttling valve outlet 132. The working fluid 118 at the throttling valve outlet 132 has a first temperature range, and in this example, the first temperature range is about negative 15 degrees Celsius to about negative 25 degrees Celsius. The first temperature range is less than the second temperature range and the third temperature range. The throttling valve 112 directs the working fluid 118 in the first temperature range and the first pressure to an evaporator inlet 134 of the evaporator 114. The working fluid 118 at the throttling valve outlet 132 is in the liquid state. It should be noted that while the use of the throttling valve 112 is described and illustrated herein, a liquid turbine generator may be used in place of the throttling valve 112. In addition, in other embodiments, a pump coupled to a liquid turbine generator may be used in place of the throttling valve 112 to generate electric energy. The electrical energy generated by the turbine generator may also be used to offset the electrical energy needed for the HVAC system 100. In other embodiments, a generator pump may be used instead of the throttling valve 112. The generator pump may be coupled or uncoupled from the compressor 110. The generator pump would also reduce a pressure and a temperature of the working fluid 118 to about the first pressure and the first temperature range.

The evaporator 114 includes the evaporator inlet 134, which is fluidly coupled to or in fluid communication with the throttling valve 112 to receive the liquid working fluid 118 in the first temperature range and the first pressure. In this example, the evaporator 114 includes an evaporator blower 136, which directs a flow of gas, such as air, through the evaporator 114. The evaporator blower 136 comprises any suitable fan or blower, and is in communication with the power source 102 to receive power to operate. The evaporator blower 136 directs the flow of the gas, such as the air, through the evaporator 114, which results in cool air 138 exiting the HVAC system 100. The cool air 138 may be directed, through ducting for example, to a cabin associated with the vehicle 99 or to other consumers associated with the vehicle 99. The working fluid 118 received at the evaporator inlet 134 flows through the evaporator 114 to an evaporator outlet 140. As the working fluid 118 flows through the evaporator 114, the working fluid 118 changes state from the liquid state to the gaseous state. The evaporator 114 includes, but is not limited to, a bare tube evaporator, a finned tube evaporator, a shell and tube evaporator, etc. The evaporator outlet 140 is fluidly coupled to or in fluid communication with a first, cold inlet 142 of the heat exchanger 116. Generally, the gaseous working fluid 118 has a pressure of about 130 kilopascal (kPa) to about 140 kilopascal (kPa) at the evaporator outlet 140. The gaseous working fluid 118 at the evaporator outlet 140 has the first temperature range. The gaseous working fluid 118 liquid in the first temperature range and the pressure is directed to the cold inlet 142 of the heat exchanger 116. Thus, the working fluid 118 at the cold inlet 142 has the first pressure and the first temperature range.

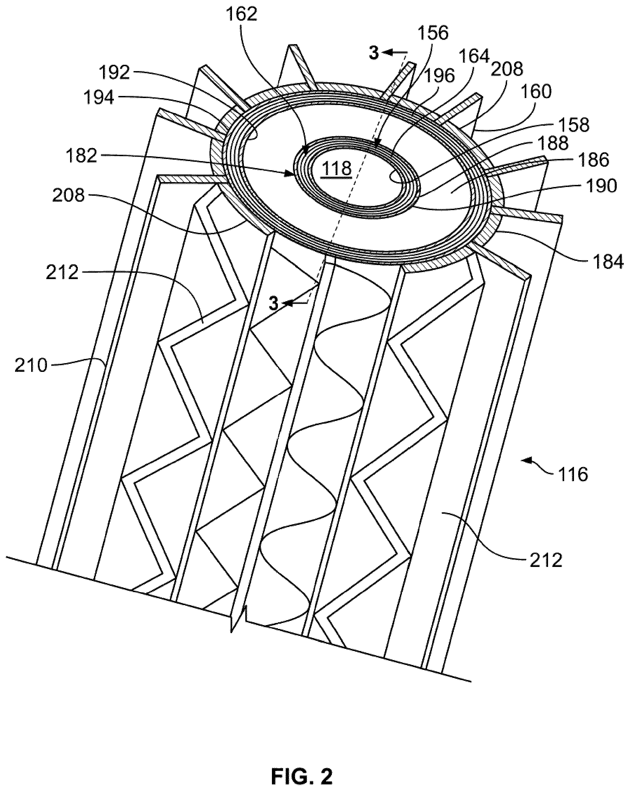

The heat exchanger 116 is fluidly coupled to and in fluid communication with the compressor 110, the throttling valve 112 and the evaporator 114. In one example, the heat exchanger 116 is a tube-in-tube heat exchanger, which includes a first tube system or cold tube system 150, a second tube system or hot tube system 152 and an outer exchanger housing 154. The cold tube system 150 includes the cold inlet 142, the cold outlet 122 and a first, cold conduit, first tube or cold tube 156 that extends between the cold inlet 142 and the cold outlet 122. With reference to FIG. 2, a perspective cross-sectional view of the heat exchanger 116 is shown. The view of FIG. 2 is taken from the perspective of line 2-2 in FIG. 1. The cold tube 156 extends through the hot tube system 152. The cold tube 156 is composed of a metal or metal alloy, including, but not limited to steel, aluminum, copper, etc. The cold tube 156 may be cast, extruded, additively manufactured, etc. In this example, the cold tube 156 is cylindrical, and includes a wall having an inner cold tube surface 158 opposite an outer cold tube surface 160 and a first thermoelectric generator 162. The inner cold tube surface 158 is in contact with the working fluid 118 as the working fluid 118 flows through the cold tube 156 from the cold inlet 142 to the cold outlet 122. The outer cold tube surface 160 is coupled to the first thermoelectric generator 162. In this example, the first thermoelectric generator 162 is arranged about a perimeter or circumference of the outer cold tube surface 160 so as to extend completely about the perimeter or circumference of the outer cold tube surface 160. It should be noted that in other embodiments, the first thermoelectric generator 162 may extend about a portion of the outer cold tube surface 160, if desired.

The first thermoelectric generator 162, in this example, also extends about the perimeter or circumference of the outer cold tube surface 160 for a length of the outer cold tube surface 160. Generally, the first thermoelectric generator 162 extends for the length between the cold inlet 142 and the cold outlet 122 such that the first thermoelectric generator 162 is coupled about the outer cold tube surface 160 along the portion of the outer cold tube surface 160 disposed within the hot tube system 152. In one example, the first thermoelectric generator 162 extends for about 80% to 95% of the outer cold tube surface 160 that extends between the cold inlet 142 and the cold outlet 122. The first thermoelectric generator 162 is coupled between the outer cold tube surface 160 and a portion of the hot tube system 152 such that the first thermoelectric generator 162 is not in direct physical contact with the working fluid 118. This ensures that the working fluid 118 does not inadvertently short the first thermoelectric generator 162. One or more seals may be coupled to the cold tube 156 and/or the hot tube system 152 to assist in sealing the first thermoelectric generator 162 from direct contact with the working fluid 118.

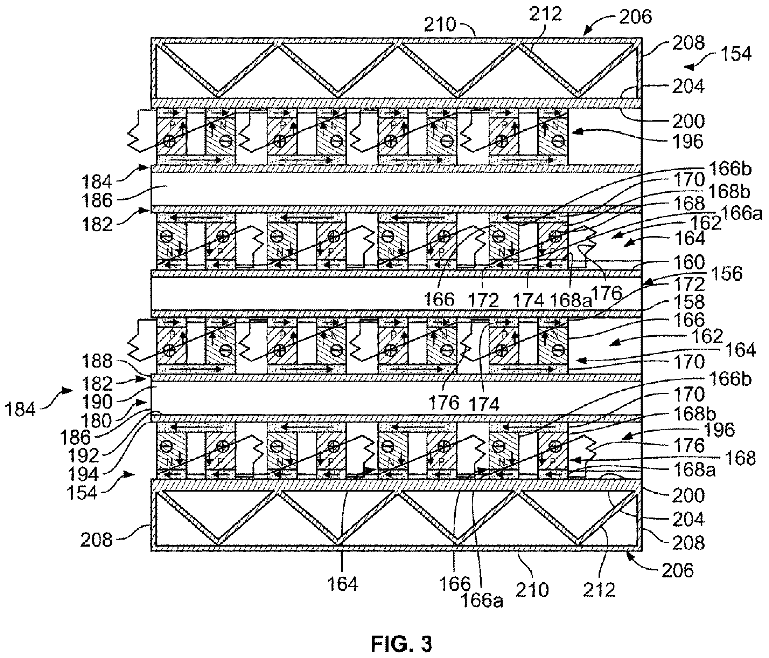

In one example, with reference to FIG. 3, the first thermoelectric generator 162 includes at least one or a plurality of first thermoelectric generator modules 164. Each first thermoelectric generator module 164 is a circuit that includes an n-type semiconductor 166, a p-type semiconductor 168, a first substrate 170, a second substrate 172 and a third substrate 174. The n-type semiconductor 166 has negative charge carriers and the p-type semiconductor 168 has positive charge carriers. The n-type semiconductor 166 and the p-type semiconductor 168 are generally composed of semiconductors, such as silicon (Si) or germanium (Ge), with atomic impurities. Each of the n-type semiconductor 166 and the p-type semiconductor 168 have a respective first semiconductor end 166a, 168a and a respective opposite second semiconductor end 166b, 168b. The first substrate 170 is coupled to the second semiconductor ends 166b, 168b and couples the n-type semiconductor 166 and the p-type semiconductor 168 in series. The first substrate 170 is also coupled to the portion of the hot tube system 152 about a perimeter or circumference of the portion of the hot tube system 152. The first substrate 170 may be coupled to the portion of the hot tube system 152 via adhesives, welding, mechanical fasteners, etc. The first substrate 170 forms an end of the first thermoelectric generator module 164. The second substrate 172 is coupled to the first semiconductor end 166a of the n-type semiconductor 166 and to the outer cold tube surface 160 about the perimeter or circumference of the outer cold tube surface 160. The third substrate 174 is coupled to the first semiconductor end 168a of the p-type semiconductor 168 and the outer cold tube surface 160 about the perimeter or circumference of the outer cold tube surface 160. The second substrate 172 and the third substrate 174 may each be coupled to the outer cold tube surface 160 via adhesives, welding, mechanical fasteners, etc. The second substrate 172 and the third substrate 174 form an end of the first thermoelectric generator module 164, which is opposite the end formed by the first substrate 170. The second substrate 172 and the third substrate 174 are electrically coupled in series to a resistive load 176 via a conductor, such as copper wire. **In** one example, each of the first substrate 170, the second substrate 172 and the third substrate 174 are composed of ceramic. Each first thermoelectric generator module 164 is also electrically coupled to a positive terminal and a negative terminal associated with the first thermoelectric generator 162. The positive terminal and the negative terminal of the first thermoelectric generator 162 are each coupled to the power source 102 and/or the downstream consumer 104. In certain examples, a transformer or inverter may be coupled between the resistive load 176 and the power source 102 and/or the downstream consumer 104 to regulate a voltage flowing to the power source 102 and/or downstream consumer 104. In one example, the positive terminal and the negative terminal are each coupled to the first substrate 170, the second substrate 172 and the third substrate 174 via respective conductors, such as copper wire, and the positive and negative terminals extend along the hot side of the first thermoelectric generator module 164, which in this example is the side of the first thermoelectric generator module 164 coupled to the perimeter or circumference of the portion of the hot tube system 152. In addition, a sealing layer or an epoxy may be wrapped around the n-type semiconductor 166 and the p-type semiconductor 168 and sandwiched between the first substrate 170, the second substrate 172 and the third substrate 174. The positive and negative terminals may be connected in series to adjacent positive and negative terminals via a conductor, such as a copper wire.

Generally, each of the first thermoelectric generator modules 164 employ the Seeback effect to generate electrical energy, such as a direct current, based on a temperature difference between the cold tube 156 and a portion of the hot tube system 152. Briefly, as the first substrate 170 is coupled to or in communication with the portion of the hot tube system 152, and the second substrate 172 and the third substrate 174 are coupled to or in communication with the outer cold tube surface 160, a temperature difference exists across each first thermoelectric generator module 164. The temperature difference causes direct current to flow in the first thermoelectric generator module 164, and the amount of direct current is directly proportional to the temperature difference. In one example, each of the first thermoelectric generator modules 164 are coupled about an entirety of the perimeter or circumference of the outer cold tube surface 160, and adjacent first thermoelectric generator modules 164 are electrically coupled together in series along the length of the cold tube 156. Thus, in this example, the first thermoelectric generator modules 164 are arranged circumferentially in rows along the length of the cold tube 156 such that the n-type semiconductor 166 of one of the first thermoelectric generator modules 164 is adjacent to the p-type semiconductor 168 of another one of the first thermoelectric generator modules 164. In addition, by being arranged in rows along the perimeter or circumference of the outer cold tube surface 160, the second substrates 172 and the third substrates 174 of each of the first thermoelectric generator modules 164 cooperate to form an end of the first thermoelectric generator 162, while the first substrates 170 of each of the first thermoelectric generator modules 164 cooperate to form an opposite end of the first thermoelectric generator 162.

With reference back to FIG. 1, the hot tube system 152 includes the hot inlet 126, the hot outlet 128 and a second, hot conduit or second, hot tube 180 that extends between the hot inlet 126 and the hot outlet 128. With reference to FIG. 2, the hot tube 180 surrounds a majority of the cold tube system 150 such that the cold tube system 150 extends through the hot tube 180 between the hot inlet 126 and the hot outlet 128. The hot tube 180 is composed of a metal or metal alloy, including, but not limited to steel, aluminum, copper, etc. The hot tube 180 may be cast, extruded, additively manufactured, etc. In this example, the hot tube 180 is cylindrical, and includes an inner perimeter tube wall 182 that is spaced apart from an outer perimeter tube wall 184 to define a channel 186. The inner perimeter tube wall 182 includes a first inner hot tube surface 188 opposite a second inner hot tube surface 190. The first inner hot tube surface 188 is coupled to the first substrate 170 of the first thermoelectric generator modules 164 of the first thermoelectric generator 162. The second inner hot tube surface 190 is in contact with the working fluid 118 as the working fluid 118 flows through the channel 186 of the hot tube 180 from the hot inlet 126 to the hot outlet 128. The outer perimeter tube wall 184 includes a first outer hot tube surface 192 opposite a second outer hot tube surface 194 and a second thermoelectric generator 196. The first outer hot tube surface 192 is in contact with the working fluid 118 as the working fluid 118 flows through the channel 186 of the hot tube 180 from the hot inlet 126 to the hot outlet 128. The second outer hot tube surface 194 is coupled to the second thermoelectric generator 196. In this example, the second thermoelectric generator 196 is arranged about a perimeter or circumference of the second outer hot tube surface 194 so as to extend completely about the perimeter or circumference of the second outer hot tube surface 194. It should be noted that in other embodiments, the second thermoelectric generator 196 may extend about a portion of the second outer hot tube surface 194, if desired.

The second thermoelectric generator 196, in this example, also extends about the perimeter or circumference of the second outer hot tube surface 194 for a length of the second outer hot tube surface 194. Generally, the second thermoelectric generator 196 extends for the length between the hot inlet 126 and the hot outlet 128 such that the second thermoelectric generator 196 is coupled about the second outer hot tube surface 194 along the portion of the second outer hot tube surface 194 arranged opposite the outer cold tube surface 160 and opposite the second inner hot tube surface 190. In one example, the second thermoelectric generator 196 extends for about 80% to 95% of the second outer hot tube surface 194 that extends between the hot inlet 126 and the hot outlet 128. The second thermoelectric generator 196 is coupled between the second outer hot tube surface 194 and a first surface 200 of the outer exchanger housing 154 such that the second thermoelectric generator 196 is not in direct physical contact with the working fluid 118. This ensures that the working fluid 118 does not inadvertently short the second thermoelectric generator 196. One or more seals may be coupled to the hot tube 180 and/or the outer exchanger housing 154 to assist in sealing the second thermoelectric generator 196 from direct contact with the working fluid 118.

In one example, with reference to FIG. 3, the second thermoelectric generator 196 includes at least one or a plurality of second thermoelectric generator modules 198. As each of the second thermoelectric generator modules 198 include components that are substantially similar or the same as the components of each of the first thermoelectric generator modules 164, the same reference numerals will be used to denote the same components. Each second thermoelectric generator module 198 is a circuit that includes the n-type semiconductor 166, the p-type semiconductor 168, the first substrate 170, the second substrate 172 and the third substrate 174. The first substrate 170 of each second thermoelectric generator module 198 is coupled to the second semiconductor ends 166b, 168b and couples the n-type semiconductor 166 and the p-type semiconductor 168 in series. The first substrate 170 of each second thermoelectric generator module 198 is also coupled to the second outer hot tube surface 194 about a perimeter or circumference of the second outer hot tube surface 194. The first substrate 170 may be coupled to the second outer hot tube surface 194 via adhesives, welding, mechanical fasteners, etc. The second substrate 172 of each second thermoelectric generator module 198 is coupled to the first semiconductor end 166a of the n-type semiconductor 166 and to the first surface 200 of the outer exchanger housing 154 about an inner perimeter or circumference of the first surface 200. The third substrate 174 of each second thermoelectric generator module 198 is coupled to the first semiconductor end 168a of the p-type semiconductor 168 and the first surface 200 of the outer exchanger housing 154 about the inner perimeter or circumference of the first surface 200. The second substrate 172 and the third substrate 174 may each be coupled to the first surface 200 of the outer exchanger housing 154 via adhesives, welding, mechanical fasteners, etc. The second substrate 172 and the third substrate 174 are electrically coupled in series to the resistive load 176 via a conductor, such as copper wire. Each second thermoelectric generator module 198 is also electrically coupled to a positive terminal and a negative terminal associated with the second thermoelectric generator 196. The positive terminal and the negative terminal of the second thermoelectric generator 196 are each coupled to the power source 102 and/or the downstream consumer 104. In certain examples, a transformer or inverter may be coupled between the resistive load 176 and the power source 102 and/or the downstream consumer 104 to regulate a voltage flowing to the power source 102 and/or downstream consumer 104. In one example, the positive terminal and the negative terminal are each coupled to the first substrate 170, the second substrate 172 and the third substrate 174 via respective conductors, such as copper wire, and the positive and negative terminals extend along the hot side of the second thermoelectric generator modules 198, which in this example is the side of the second thermoelectric generator modules 198 coupled to the perimeter or circumference of the second outer hot tube surface 194. In addition, a sealing layer or an epoxy may be wrapped around the n-type semiconductor 166 and the p-type semiconductor 168 and sandwiched between the first substrate 170, the second substrate 172 and the third substrate 174. The positive and negative terminals may be connected in series to adjacent positive and negative terminals via a conductor, such as a copper wire.

Generally, each of the second thermoelectric generator modules 198 employ the Seeback effect to generate electrical energy, such as a direct current, based on a temperature difference between the hot tube 180 and a portion of the outer exchanger housing 154. Briefly, as the first substrate 170 of each second thermoelectric generator module 198 is coupled to or in communication with the second outer hot tube surface 194 of the hot tube system 152, and the second substrate 172 and the third substrate 174 of each second thermoelectric generator module 198 are coupled to or in communication with the outer exchanger housing 154, which is exposed to cooler ambient air, a temperature difference exists across each second thermoelectric generator module 198. The temperature difference causes direct current to flow in the second thermoelectric generator module 198, and the amount of direct current is directly proportional to the temperature difference. In one example, each of the second thermoelectric generator modules 198 are coupled about an entirety of the perimeter or circumference of the second outer hot tube surface 194, and adjacent second thermoelectric generator modules 198 are electrically coupled together in series along the length of the hot tube 180. Thus, in this example, the second thermoelectric generator modules 198 are arranged circumferentially in rows along the length of the hot tube 180 such that the n-type semiconductor 166 of one of the second thermoelectric generator modules 198 is adjacent to the p-type semiconductor 168 of another one of the second thermoelectric generator modules 198. By being arranged in rows along the perimeter or circumference of the second outer hot tube surface 194, the first substrates 170 of each of the second thermoelectric generator module 198 cooperate to form an end of the second thermoelectric generator 196, while the second substrates 172 and the third substrates 174 of each of the second thermoelectric generator module 198 cooperate to form an opposite end of the second thermoelectric generator 196.

The outer exchanger housing 154 surrounds the hot tube 180. The outer exchanger housing 154 includes the first surface 200 and an opposite second surface 204. The outer exchanger housing 154 is composed of a metal or metal alloy, including, but not limited to steel, aluminum, copper, etc. The outer exchanger housing 154 may be cast, extruded, additively manufactured, etc. The first surface 200 is coupled to and in communication with the second substrate 172 and the third substrate 174 of each of the second thermoelectric generator modules 198. The second surface 204 includes a fin structure 206. In one example, the fin structure 206 includes at least one or a plurality of circumferential sections 208, at least one or a plurality of axial sections 210 and at least one or a plurality of wavy sections 212. The circumferential sections 208 are spaced apart about the perimeter or circumference of the outer exchanger housing 154. Respective ones of the axial sections 210 extend between the circumferential sections 208 about the perimeter or circumference of the outer exchanger housing 154 to form a plurality of rectangular, box like structures along the second surface 204. A respective wavy section 212 extends in an alternating fashion between the adjacent axial sections 210 of a respective box like structure. The wavy sections 212 generally extend between adjacent circumferential sections 208 of the respective box like structure. The fin structure 206 assists in providing additional cooling to the outer exchanger housing 154, which assists in maintaining a temperature difference between the outer exchanger housing 154 and the hot tube 180. In addition, the wavy sections 212 may provide structural support for the axial sections 210 and/or the circumferential sections 208. It should be noted that while described herein as "the wavy sections 212," the sections 212 may not be wavy, but may be zig-zag or any other shape that provides support to the circumferential sections 208 and/or the axial sections 210. Further, there may be other fin structures disposed between the circumferential sections 208 and the axial sections 210 to provide additional structural support, if desired.

It should be noted that the fin structure 206 described and illustrated herein is merely an example, as other fin structures may be employed to assist in maintaining a temperature difference between the hot tube 180 and the outer exchanger housing 154. For example, one or more cooling disks may be coupled to the outer exchanger housing 154. Alternatively, one or more planar or straight fins may extend axially from the outer exchanger housing 154. As a further alternative, a fin structure coupled to the outer exchanger housing 154 may comprise a flower shape, helical shape or serpentine shape. With reference back to FIG. 1, the heat exchanger 116 may also include an optional blower 220. The blower 220 directs a flow of gas, such as air, over the outer exchanger housing 154. As the gas is at an ambient temperature, the gas assists in cooling the outer exchanger housing 154 to maintain a temperature difference between the outer exchanger housing 154 and the hot tube 180. The blower 220 comprises any suitable fan or blower, and is in communication with the power source 102 to receive power to operate.

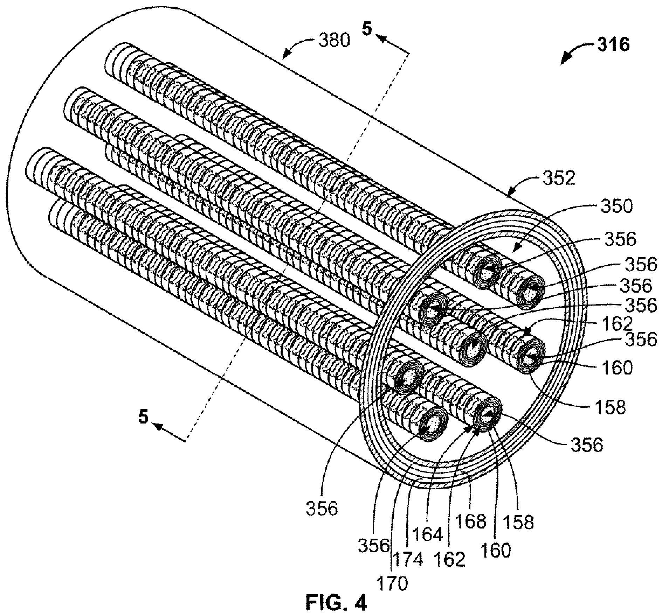

It should be noted that while the heat exchanger 116 is described and illustrated in FIGS. 1-3 as comprising a tube-in-tube heat exchanger, the heat exchanger 116 may be configured in a variety of ways to generate electrical energy during the operation of the HVAC system 100. For example, with reference to FIG. 4, a heat exchanger 316 is shown. As the heat exchanger 316 includes components that are substantially similar or the same as the components of the heat exchanger 116 discussed with regard to FIGS. 1-3, the same reference numerals will be used to denote the same or similar features.

The heat exchanger 316 is fluidly coupled to and in fluid communication with the compressor 110, the throttling valve 112 and the evaporator 114. In one example, the heat exchanger 316 is a shell-in-tube heat exchanger, which includes a first, cold tube system 350 and a second, hot shell system 352. The cold tube system 350 includes a plurality of first, cold inlets, a plurality of first, cold outlets and a plurality of first, cold conduits or first, cold tubes 356. Each of the cold tubes 356 extends between a respective one of the cold inlets and a respective one of the cold outlets. Each of the cold tubes 356 extends through the hot shell system 352. Each of the cold tubes 356 is composed of a metal or metal alloy, including, but not limited to steel, aluminum, copper, etc. Each of the cold tubes 356 may be cast, extruded, additively manufactured, etc. In this example, each of the cold tubes 356 is cylindrical, and includes the wall having the inner cold tube surface 158 opposite the outer cold tube surface 160 and the first thermoelectric generator 162. The inner cold tube surface 158 is in contact with the working fluid 118 as the working fluid 118 flows through the respective cold tube 356. The outer cold tube surface 160 is coupled to the first thermoelectric generator 162.

Generally, the first thermoelectric generator 162 extends for the length between the respective cold inlet and the respective cold outlet such that the first thermoelectric generator 162 is coupled about the outer cold tube surface 160 along the portion of the outer cold tube surface 160 disposed within the hot shell system 352. In one example, an additional tube may be positioned about the first thermoelectric generator 162 such that the first thermoelectric generator 162 is not in direct physical contact with the working fluid 118 that flows through the hot shell system 352. This ensures that the working fluid 118 does not inadvertently short the first thermoelectric generator 162. As discussed, the first thermoelectric generator 162 includes the plurality of first thermoelectric generator modules 164. The first substrate 170 is coupled to the second semiconductor ends 166b, 168b and couples the n-type semiconductor 166 and the p-type semiconductor 168 in series. The first substrate 170 is in communication with the hot shell system 352. The second substrate 172 is coupled to the first semiconductor end 166a of the n-type semiconductor 166 and to the outer cold tube surface 160 about the perimeter or circumference of the outer cold tube surface 160. The third substrate 174 is coupled to the first semiconductor end 168a of the p-type semiconductor 168 and the outer cold tube surface 160 about the perimeter or circumference of the outer cold tube surface 160. The second substrate 172 and the third substrate 174 are electrically coupled in series to the resistive load 176. As the first substrate 170 is coupled to or in communication with the hot shell system 352, and the second substrate 172 and the third substrate 174 are coupled to or in communication with the outer cold tube surface 160, a temperature difference exists across each first thermoelectric generator module 164. The temperature difference causes electrical energy, such as a direct current, to flow in the first thermoelectric generator module 164, and the amount of direct current is directly proportional to the temperature difference.

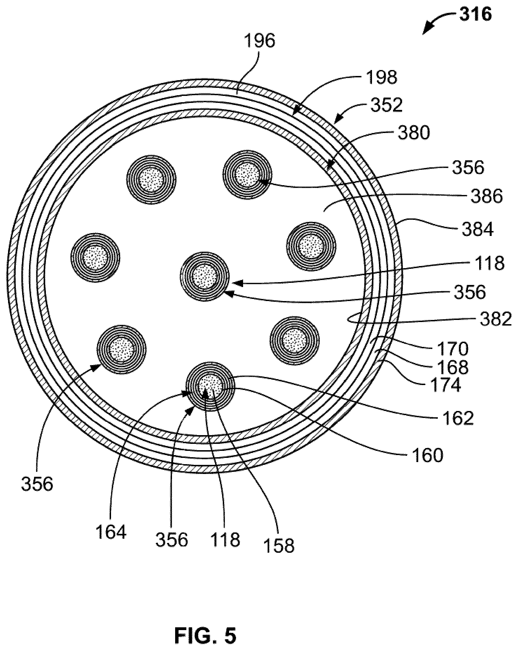

The hot shell system 352 includes a second, hot inlet (the same as the hot inlet 126 of FIG. 1), a second, hot outlet (the same as the hot outlet 128 of FIG. 1) and a second, hot conduit or second, hot shell 380 that extends between the hot inlet and the hot outlet. With reference to FIG. 5, the hot shell 380 surrounds a majority of the cold tube system 350 such that the cold tube system 350 extends through the hot shell 380 between the hot inlet and the hot outlet. The hot shell 380 is composed of a metal or metal alloy, including, but not limited to steel, aluminum, copper, etc. The hot shell 380 may be cast, extruded, additively manufactured, etc. In this example, the hot shell 380 is cylindrical, and includes a wall having an inner perimeter surface 382 and an outer perimeter surface 384. A channel 386 is defined by the inner perimeter surface 382, which surrounds the cold tube system 350. The inner perimeter surface 382 is in contact with the working fluid 118 as the working fluid 118 flows through the channel 386 of the hot shell 380 from the hot inlet to the hot outlet. The outer perimeter surface 384 is coupled to the second thermoelectric generator 196. In this example, the second thermoelectric generator 196 is arranged about a perimeter or circumference of the outer perimeter surface 384 so as to extend completely about the perimeter or circumference of the outer perimeter surface 384. It should be noted that in other embodiments, the second thermoelectric generator 196 may extend about a portion of the outer perimeter surface 384, if desired.

The second thermoelectric generator 196, in this example, also extends about the perimeter or circumference of the outer perimeter surface 384 for a length of the outer perimeter surface 384. Generally, the second thermoelectric generator 196 extends for the length between the hot inlet and the hot outlet such that the second thermoelectric generator 196 is coupled about the outer perimeter surface 384 along the portion of the outer perimeter surface 384 arranged opposite the cold tube system 350. Although not shown herein, an exterior housing may be disposed about the second thermoelectric generator 196, if desired. As discussed, the second thermoelectric generator 196 includes the plurality of second thermoelectric generator modules 198. Each second thermoelectric generator module 198 is a circuit that includes the n-type semiconductor 166, the p-type semiconductor 168, the first substrate 170, the second substrate 172 and the third substrate 174. The first substrate 170 of each second thermoelectric generator module 198 is coupled to the outer perimeter surface 384 about a perimeter or circumference of the outer perimeter surface 384. The first substrate 170 may be coupled to the outer perimeter surface 384 via adhesives, welding, mechanical fasteners, etc. The second substrate 172 of each second thermoelectric generator module 198 is coupled to the first semiconductor end 166a of the n-type semiconductor 166 and the third substrate 174 of each second thermoelectric generator module 198 is coupled to the first semiconductor end 168a of the p-type semiconductor 168. The second substrate 172 and the third substrate 174 are electrically coupled in series to the resistive load 176.

Briefly, as the first substrate 170 of each second thermoelectric generator module 198 is coupled to or in communication with the outer perimeter surface 384 of the hot shell 380, and the second substrate 172 and the third substrate 174 of each second thermoelectric generator module 198 are in communication with cooler ambient air, a temperature difference exists across each second thermoelectric generator module 198, which results in the generation of electrical energy. In one example, each of the second thermoelectric generator modules 198 are coupled about an entirety of the perimeter or circumference of the second outer hot tube surface 194, and adjacent second thermoelectric generator modules 198 are electrically coupled together in series along the length of the hot shell 380. Thus, in this example, the second thermoelectric generator modules 198 are arranged circumferentially in rows along the length of the hot shell 380.

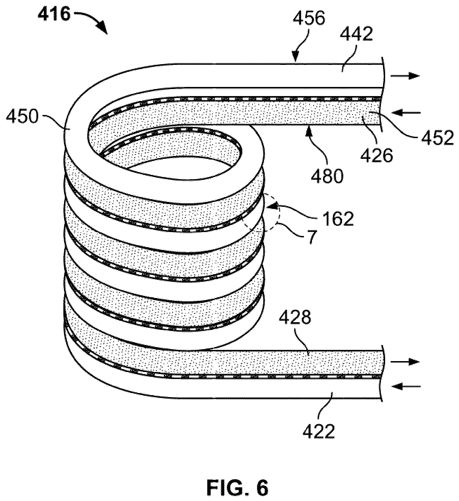

It should be noted that while the heat exchanger 116 is described and illustrated in FIGS. 1-3 as comprising a tube-in-tube heat exchanger, the heat exchanger 116 may be configured in a variety of ways to generate electrical energy during the operation of the HVAC system 100. For example, with reference to FIG. 6, a heat exchanger 416 is shown. As the heat exchanger 416 includes components that are substantially similar or the same as the components of the heat exchanger 116 discussed with regard to FIGS. 1-3, the same reference numerals will be used to denote the same or similar features.

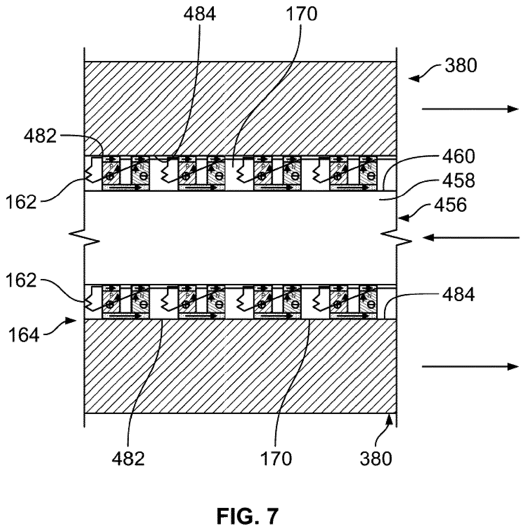

The heat exchanger 416 is fluidly coupled to and in fluid communication with the compressor 110, the throttling valve 112 and the evaporator 114 (FIG. 1). In one example, the heat exchanger 416 is a helical coil-in-coil heat exchanger, which includes a first, cold tube system 450 and a second, hot tube system 452. The cold tube system 450 includes a first, cold inlet 442, a first, cold outlet 422, and a first, cold coiled conduit or first, cold coiled tube 456. The cold coiled tube 456 extends between the cold inlet 442 and the cold outlet 422. The cold coiled tube 456 is intertwined or interleaved with the hot tube system 452. The cold coiled tube 456 is composed of a metal or metal alloy, including, but not limited to steel, aluminum, copper, etc. The cold coiled tube 456 may be cast, extruded, additively manufactured, etc. In this example, the cold coiled tube 456 is cylindrical and wound to form a helical coil. With reference to FIG. 7, the cold coiled tube 456 includes the wall having an inner cold tube surface 458 opposite an outer cold tube surface 460 and the first thermoelectric generator 162. The inner cold tube surface 458 is in contact with the working fluid 118 as the working fluid 118 flows through the cold coiled tube 456. The outer cold tube surface 460 is coupled to the first thermoelectric generator 162.

Generally, the first thermoelectric generator 162 extends for the length between the cold inlet 442 and the cold outlet 422 such that the first thermoelectric generator 162 is coupled about the outer cold tube surface 460 along the portion of the outer cold tube surface 160 disposed between coils of the hot tube system 452. As discussed, with reference to FIG. 7, the first thermoelectric generator 162 includes the plurality of first thermoelectric generator modules 164. The first substrate 170 is coupled to the second semiconductor ends 166b, 168b and couples the n-type semiconductor 166 and the p-type semiconductor 168 in series. The first substrate 170 is indirectly in communication with the hot tube system 452. The second substrate 172 is coupled to the first semiconductor end 166a of the n-type semiconductor 166 and to the outer cold tube surface 460 about the perimeter or circumference of the outer cold tube surface 460. The third substrate 174 is coupled to the first semiconductor end 168a of the p-type semiconductor 168 and the outer cold tube surface 460 about the perimeter or circumference of the outer cold tube surface 460. The second substrate 172 and the third substrate 174 are electrically coupled in series to the resistive load 176. As the first substrate 170 is coupled to or in communication with the hot tube system 452, and the second substrate 172 and the third substrate 174 are coupled to or in communication with the outer cold tube surface 460, a temperature difference exists across each first thermoelectric generator module 164. The temperature difference causes electrical energy, such as a direct current, to flow in the first thermoelectric generator module 164, and the amount of direct current is directly proportional to the temperature difference.

With reference back to FIG. 6, the hot tube system 452 includes a second, hot inlet 426, a second, hot outlet 428 and a second, hot coiled conduit or second, hot coiled tube 480 that extends between the hot inlet 426 and the hot outlet 428. The hot coiled tube 480 is composed of a metal or metal alloy, including, but not limited to steel, aluminum, copper, etc. The hot coiled tube 480 may be cast, extruded, additively manufactured, etc. In this example, the hot coiled tube 480 is cylindrical and wound to form a helical coil. With reference back to FIG. 7, the hot coiled tube 480 includes a wall having an inner hot tube surface 482 opposite an outer hot tube surface 484. The inner hot tube surface 482 is in contact with the working fluid 118 as the working fluid 118 flows through the hot coiled tube 480. The outer hot tube surface 484 is coupled to the first substrate 170 of the first thermoelectric generator 162.

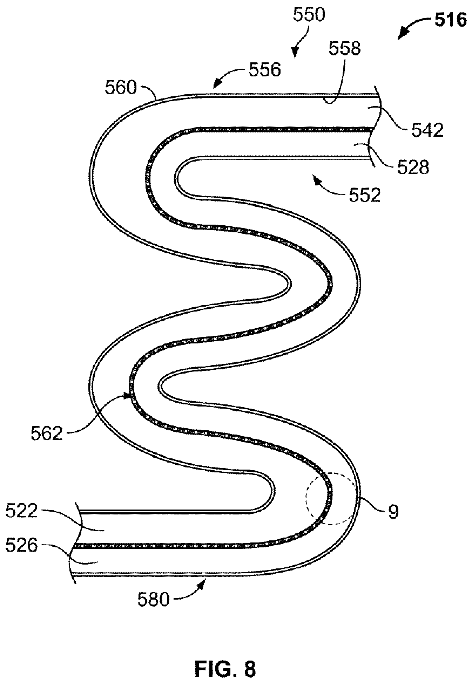

It should be noted that while the heat exchanger 116 is described and illustrated in FIGS. 1-3 as comprising a tube-in-tube heat exchanger, the heat exchanger 116 may be configured in a variety of ways to generate electrical energy during the operation of the HVAC system 100. For example, with reference to FIG. 8, a heat exchanger 516 is shown. As the heat exchanger 516 includes components that are substantially similar or the same as the components of the heat exchanger 116 discussed with regard to FIGS. 1-3, the same reference numerals will be used to denote the same or similar features.

The heat exchanger 516 is fluidly coupled to and in fluid communication with the compressor 110, the throttling valve 112 and the evaporator 114 (FIG. 1). In one example, the heat exchanger 516 is a serpentine coil-in-coil heat exchanger, which includes a first, cold tube system 550 and a second, hot tube system 552. The cold tube system 550 includes a first, cold inlet 542, a first, cold outlet 522, and a first, cold serpentine coiled conduit or first, cold serpentine coiled tube 556. The cold serpentine coiled tube 556 extends between the cold inlet 542 and the cold outlet 522. The cold serpentine coiled tube 556 is adjacent to or intertwined with the hot tube system 552. The cold serpentine coiled tube 556 is composed of a metal or metal alloy, including, but not limited to steel, aluminum, copper, etc. The cold serpentine coiled tube 556 may be cast, extruded, additively manufactured, etc. In this example, the cold serpentine coiled tube 556 is cylindrical and wound to form a serpentine coil. The cold serpentine coiled tube 556 includes the wall having an inner cold tube surface 558 opposite an outer cold tube surface 560 and a first thermoelectric generator 562. The inner cold tube surface 558 is in contact with the working fluid 118 as the working fluid 118 flows through the cold serpentine coiled tube 556. The outer cold tube surface 560 is coupled to the first thermoelectric generator 562.

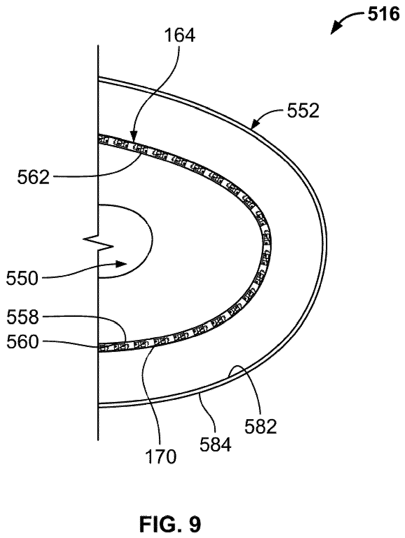

Generally, the first thermoelectric generator 562 is sandwiched between coils of the cold serpentine coiled tube 556 and the hot tube system 552. With reference to FIG. 9, the first thermoelectric generator 562 includes the plurality of first thermoelectric generator modules 164. The first substrate 170 is coupled to the second semiconductor ends 166b, 168b and couples the n-type semiconductor 166 and the p-type semiconductor 168 in series. The first substrate 170 is in communication with the hot tube system 552. The second substrate 172 is coupled to the first semiconductor end 166a of the n-type semiconductor 166 and to the outer cold tube surface 560. The third substrate 174 is coupled to the first semiconductor end 168a of the p-type semiconductor 168 and the outer cold tube surface 560. The second substrate 172 and the third substrate 174 are electrically coupled in series to the resistive load 176. As the first substrate 170 is coupled to or in communication with the hot tube system 552, and the second substrate 172 and the third substrate 174 are coupled to or in communication with the outer cold tube surface 560, a temperature difference exists across each first thermoelectric generator module 164. The temperature difference causes electrical energy, such as a direct current, to flow in the first thermoelectric generator module 164, and the amount of direct current is directly proportional to the temperature difference.

With reference back to FIG. 8, the hot tube system 552 includes a second, hot inlet 526, a second, hot outlet 528 and a second, hot coiled conduit or second, hot serpentine coiled tube 580 that extends between the hot inlet 526 and the hot outlet 528. The hot serpentine coiled tube 580 is composed of a metal or metal alloy, including, but not limited to steel, aluminum, copper, etc. The hot serpentine coiled tube 580 may be cast, extruded, additively manufactured, etc. In this example, the hot serpentine coiled tube 580 is cylindrical and wound to form a serpentine coil. With reference back to FIG. 9, the hot serpentine coiled tube 580 includes a wall having an inner hot tube surface 582 opposite an outer hot tube surface 584. The inner hot tube surface 582 is in contact with the working fluid 118 as the working fluid 118 flows through the hot serpentine coiled tube 580. The coils of the outer hot tube surface 584 is coupled to the first substrate 170 of the first thermoelectric generator 562. In one example, the outer hot tube surface 584 that is not directly adjacent to the first thermoelectric generator 562 may also include one or more fins. The fins may extend outward from the outer hot tube surface 584 axially and may be planar.

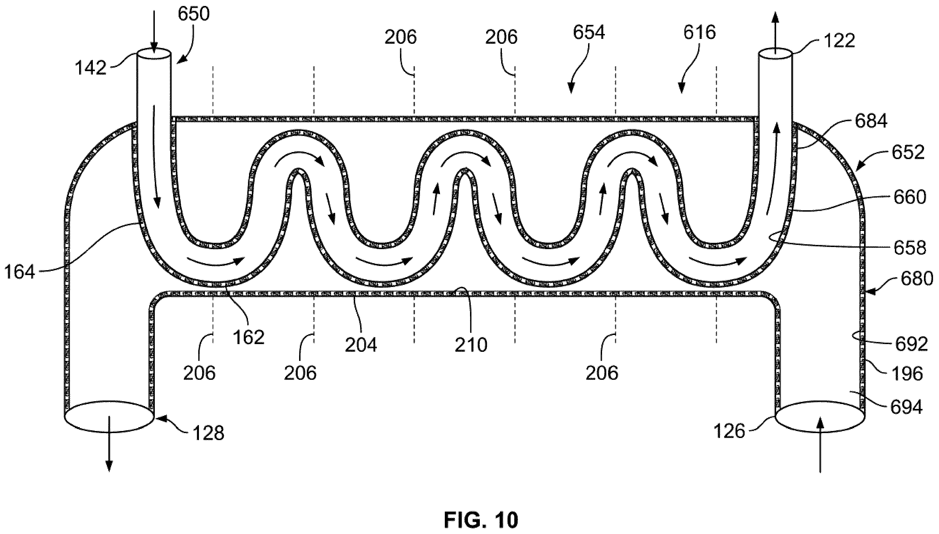

It should be noted that while the heat exchanger 116 is described and illustrated in FIGS. 1-3 as comprising a tube-in-tube heat exchanger with a substantially straight cold tube 156, a first, cold conduit, first tube or cold tube for use with the heat exchanger 116 may be configured in a variety of ways to generate electrical energy during the operation of the HVAC system 100. For example, with reference to FIG. 10, a heat exchanger 616 is shown with a first, cold conduit, first tube or cold tube 656. As the heat exchanger 616 includes components that are substantially similar or the same as the components of the heat exchanger 116 discussed with regard to FIGS. 1-3, the same reference numerals will be used to denote the same or similar features.

In this example, the heat exchanger 616 is a tube-in-tube heat exchanger, which includes a first tube system or cold tube system 650, a second tube system or hot tube system 652 and the outer exchanger housing 154. The cold tube system 650 includes the cold inlet 142, the cold outlet 122 and the cold tube 656 that extends between the cold inlet 142 and the cold outlet 122. The cold tube 656 extends through the hot tube system 652. The cold tube 656 is composed of a metal or metal alloy, including, but not limited to steel, aluminum, copper, etc. The cold tube 656 may be cast, extruded, additively manufactured, etc. In this example, the cold tube 656 is cylindrical and is formed in a serpentine shape. The cold tube 656 includes a wall having an inner cold tube surface 658 opposite an outer cold tube surface 660 and the first thermoelectric generator 162. The inner cold tube surface 658 is in contact with the working fluid 118 as the working fluid 118 flows through the cold tube 656 from the cold inlet 142 to the cold outlet 122. The outer cold tube surface 660 is coupled to the first thermoelectric generator 162. In this example, the first thermoelectric generator 162 is arranged about a perimeter or circumference of the outer cold tube surface 660 so as to extend completely about the perimeter or circumference of the outer cold tube surface 660. It should be noted that in other embodiments, the first thermoelectric generator 162 may extend about a portion of the perimeter or circumference of the outer cold tube surface 660 due to geometric constraints, for example. Further, while the first thermoelectric generator 162 is shown extending along a substantial majority of a length of the cold tube surface 660, the first thermoelectric generator 162 may extend along a portion of the length of the cold tube surface 660, due to geometric constraints, for example.

The first thermoelectric generator 162, in this example, also extends about the perimeter or circumference of the outer cold tube surface 660 for a length of the outer cold tube surface 660. Generally, the first thermoelectric generator 162 extends for the length between the cold inlet 142 and the cold outlet 122 such that the first thermoelectric generator 162 is coupled about the outer cold tube surface 660 along the portion of the outer cold tube surface 660 disposed within the hot tube system 152. In one example, the first thermoelectric generator 162 extends for about 80% to 95% of the outer cold tube surface 660 that extends between the cold inlet 142 and the cold outlet 122. The first thermoelectric generator 162 is coupled between the outer cold tube surface 660 and a portion of the hot tube system 152 such that the first thermoelectric generator 162 is not in direct physical contact with the working fluid 118. This ensures that the working fluid 118 does not inadvertently short the first thermoelectric generator 162. One or more seals or a sealing structure, such as a sealing wrap, may be coupled to the cold tube 656 and/or the hot tube system 652 to assist in sealing the first thermoelectric generator 162 from direct contact with the working fluid 118.

The hot tube system 652 includes the hot inlet 126, the hot outlet 128 and a second, hot conduit or second, hot tube 680 that extends between the hot inlet 126 and the hot outlet 128. The hot tube 680 surrounds a majority of the cold tube system 650 such that the cold tube system 650 extends through the hot tube 680 between the hot inlet 126 and the hot outlet 128. The hot tube 680 is composed of a metal or metal alloy, including, but not limited to steel, aluminum, copper, etc. The hot tube 680 may be cast, extruded, additively manufactured, etc. In this example, the hot tube 680 is cylindrical, and includes an outer perimeter tube wall 684. In certain examples, an inner perimeter tube may be used to surround the first substrate 170 of the first thermoelectric generator modules 164 of the first thermoelectric generator 162. The outer perimeter tube wall 684 includes a first outer hot tube surface 692 opposite a second outer hot tube surface 694 and the second thermoelectric generator 196. The first outer hot tube surface 692 is in contact with the working fluid 118 as the working fluid 118 flows through the hot tube 680 from the hot inlet 126 to the hot outlet 128. The second outer hot tube surface 694 is coupled to the second thermoelectric generator 196. In this example, the second thermoelectric generator 196 is arranged about a perimeter or circumference of the second outer hot tube surface 694 so as to extend completely about the perimeter or circumference of the second outer hot tube surface 694. It should be noted that in other embodiments, the second thermoelectric generator 196 may extend about a portion of the perimeter or circumference of the second outer hot tube surface 694 due to geometric constraints, for example. Further, while the second thermoelectric generator 196 is shown extending along a substantial majority of a length of the second outer hot tube surface 694, the second thermoelectric generator 196 may extend along a portion of the length of the second outer hot tube surface 694, due to geometric constraints, for example.

The outer exchanger housing 154 surrounds the hot tube 680. The outer exchanger housing 154 includes the first surface 200 and the opposite second surface 204. The second surface 204 includes the fin structure 206. The fin structure 206 assists in providing additional cooling to the outer exchanger housing 154, which assists in maintaining a temperature difference between the outer exchanger housing 154 and the hot tube 680. The heat exchanger 616 may also include the optional fan or blower 220.

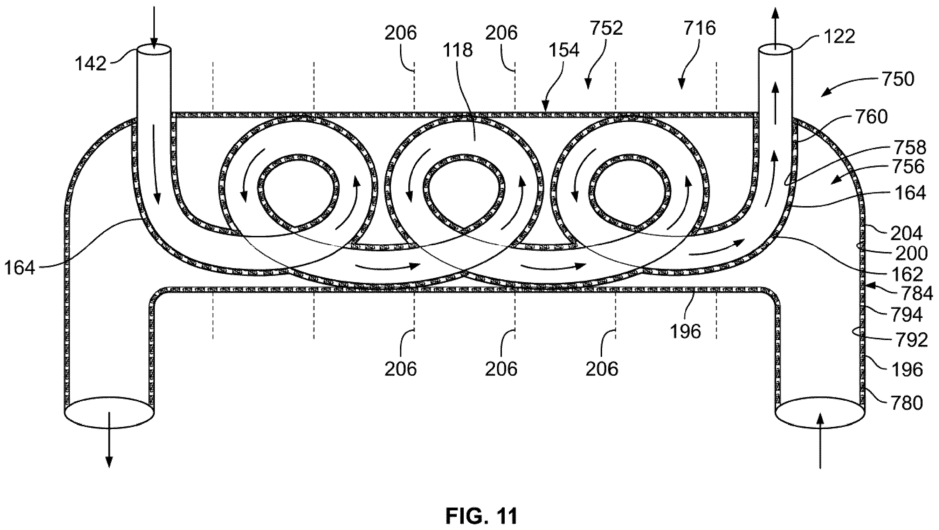

It should be noted that while the heat exchanger 116 is described and illustrated in FIGS. 1-3 as comprising a tube-in-tube heat exchanger with a substantially straight cold tube 156, a first, cold conduit, first tube or cold tube for use with the heat exchanger 116 may be configured in a variety of ways to generate electrical energy during the operation of the HVAC system 100. For example, with reference to FIG. 11, a heat exchanger 716 is shown with a first, cold conduit, first tube or cold tube 756. As the heat exchanger 716 includes components that are substantially similar or the same as the components of the heat exchanger 116 discussed with regard to FIGS. 1-3, the same reference numerals will be used to denote the same or similar features.

In this example, the heat exchanger 716 is a tube-in-tube heat exchanger, which includes a first tube system or cold tube system 750, a second tube system or hot tube system 752 and the outer exchanger housing 154. The cold tube system 750 includes the cold inlet 142, the cold outlet 122 and the cold tube 756 that extends between the cold inlet 142 and the cold outlet 122. The cold tube 756 extends through the hot tube system 752. The cold tube 756 is composed of a metal or metal alloy, including, but not limited to steel, aluminum, copper, etc. The cold tube 756 may be cast, extruded, additively manufactured, etc. In this example, the cold tube 756 is cylindrical and is formed in a coiled shape. The cold tube 756 includes a wall having an inner cold tube surface 758 opposite an outer cold tube surface 760 and the first thermoelectric generator 162. The inner cold tube surface 758 is in contact with the working fluid 118 as the working fluid 118 flows through the cold tube 756 from the cold inlet 142 to the cold outlet 122. The outer cold tube surface 760 is coupled to the first thermoelectric generator 162. In this example, the first thermoelectric generator 162 is arranged about a perimeter or circumference of the outer cold tube surface 760 so as to extend completely about the perimeter or circumference of the outer cold tube surface 760. It should be noted that in other embodiments, the first thermoelectric generator 162 may extend about a portion of the perimeter or circumference of the outer cold tube surface 760, due to geometric constraints, for example. Further, while the first thermoelectric generator 162 is shown extending along a substantial majority of the length of the outer cold tube surface 760, the first thermoelectric generator 162 may extend along a portion of the length of the outer cold tube surface 760, due to geometric constraints, for example.

The first thermoelectric generator 162, in this example, also extends about the perimeter or circumference of the outer cold tube surface 760 for a length of the outer cold tube surface 760. Generally, the first thermoelectric generator 162 extends for the length between the cold inlet 142 and the cold outlet 122 such that the first thermoelectric generator 162 is coupled about the outer cold tube surface 760 along the portion of the outer cold tube surface 760 disposed within the hot tube system 152. In one example, the first thermoelectric generator 162 extends for about 80% to 95% of the outer cold tube surface 760 that extends between the cold inlet 142 and the cold outlet 122. The first thermoelectric generator 162 is coupled between the outer cold tube surface 760 and a portion of the hot tube system 152 such that the first thermoelectric generator 162 is not in direct physical contact with the working fluid 118. This ensures that the working fluid 118 does not inadvertently short the first thermoelectric generator 162. One or more seals or a sealing structure, such as a sealing wrap, may be coupled to the cold tube 756 and/or the hot tube system 752 to assist in sealing the first thermoelectric generator 162 from direct contact with the working fluid 118.

The hot tube system 752 includes the hot inlet 126, the hot outlet 128 and a second, hot conduit or second, hot tube 780 that extends between the hot inlet 126 and the hot outlet 128. The hot tube 780 surrounds a majority of the cold tube system 750 such that the cold tube system 750 extends through the hot tube 780 between the hot inlet 126 and the hot outlet 128. The hot tube 780 is composed of a metal or metal alloy, including, but not limited to steel, aluminum, copper, etc. The hot tube 780 may be cast, extruded, additively manufactured, etc. In this example, the hot tube 780 is cylindrical, and includes an outer perimeter tube wall 784. In certain examples, an inner perimeter tube may be used to surround the first substrate 170 of the first thermoelectric generator modules 164 of the first thermoelectric generator 162. The outer perimeter tube wall 784 includes a first outer hot tube surface 792 opposite a second outer hot tube surface 794 and the second thermoelectric generator 196. The first outer hot tube surface 792 is in contact with the working fluid 118 as the working fluid 118 flows through the hot tube 780 from the hot inlet 126 to the hot outlet 128. The second outer hot tube surface 794 is coupled to the second thermoelectric generator 196. In this example, the second thermoelectric generator 196 is arranged about a perimeter or circumference of the second outer hot tube surface 794 so as to extend completely about the perimeter or circumference of the second outer hot tube surface 794. It should be noted that in other embodiments, the second thermoelectric generator 196 may extend about a portion of the perimeter or circumference second outer hot tube surface 194 due to geometric constraints, for example. Further, while the second thermoelectric generator 196 is shown extending along a substantial majority of a length of the second outer hot tube surface 194, the second thermoelectric generator 196 may extend along a portion of the length of the second outer hot tube surface 194, due to geometric constraints, for example.

The outer exchanger housing 154 surrounds the hot tube 780. The outer exchanger housing 154 includes the first surface 200 and the opposite second surface 204. The second surface 204 includes the fin structure 206. The fin structure 206 assists in providing additional cooling to the outer exchanger housing 154, which assists in maintaining a temperature difference between the outer exchanger housing 154 and the hot tube 780. The heat exchanger 716 may also include the optional fan or blower 220.

In one example, with reference back to FIG. 1, in order to assemble the HVAC system 100, the heat exchanger 116, 316, 416, 516, 616, 716 may be assembled. In the example of the heat exchanger 116, the first thermoelectric generator 162 is coupled to the outer cold tube surface 160 of the cold tube 156. The inner perimeter tube wall 182 is coupled about the cold tube 156, and is coupled to the first thermoelectric generator 162. The outer perimeter tube wall 184 is coupled about the inner perimeter tube wall 182 so as to be spaced apart from the inner perimeter tube wall 182 to define the channel 186. The second thermoelectric generator 196 is coupled to the outer perimeter tube wall 184. The outer exchanger housing 154 is coupled about the outer perimeter tube wall 184 and is coupled to the second thermoelectric generator 196. In the example of the heat exchanger 316, the first thermoelectric generator 162 is coupled to the outer cold tube surface 160 of each of the cold tubes 356. The hot shell 380 is coupled about the cold tubes 356. The second thermoelectric generator 196 is coupled to the hot shell 380. In the example of the heat exchanger 416, the first thermoelectric generator 162 is coupled to the outer cold tube surface 160 of the cold coiled tube 456. The hot coiled tube 480 is intertwined or interleaved with the cold coiled tube 456 such that the hot coiled tube 480 is coupled to the first thermoelectric generator 162. In the example of the heat exchanger 516, the hot serpentine coiled tube 580 is intertwined with the cold serpentine coiled tube 556. The first thermoelectric generator 162 is sandwiched between the hot serpentine coiled tube 580 and the cold serpentine coiled tube 556 such that the cold serpentine coiled tube 556 and the hot serpentine coiled tube 580 are coupled to the first thermoelectric generator 662. In the example of the heat exchanger 616, 716, the first thermoelectric generator 162 is coupled to the outer cold tube surface 660, 760. The cold tube 656, 756 is positioned within the hot tube 680, 780 so that the hot tube 680, 780 is coupled to the first thermoelectric generator 162.

With the heat exchanger 116, 316, 416, 516, 616, 716 assembled, the compressor inlet 120 of the compressor 110 is directly fluidly coupled to the cold outlet 122, 422, 522 of the heat exchanger 116, 316, 416, 516, 616, 716. The compressor outlet 124 is directly fluidly coupled to the hot inlet 126, 426, 526 of the heat exchanger 116, 316, 416, 516, 616, 716. The throttling valve inlet 130 of the throttling valve 112 is directly fluidly coupled to the hot outlet 128, 428, 528 of the heat exchanger 116, 316, 416, 516, 616, 716. The throttling valve outlet 132 is directly fluidly coupled to the evaporator inlet 134. The evaporator outlet 140 is directly fluidly coupled to the cold inlet 142, 442, 542 of the heat exchanger 116, 316, 416, 516, 616, 716. The evaporator blower 136, and the blower 220, if employed, are each coupled to the power source 102. The power source 102 is coupled to the first thermoelectric generator 162. The second thermoelectric generator 196 of the heat exchanger 116, 316 is coupled to the power source 102. The first thermoelectric generator 162 and the second thermoelectric generator 196 of the heat exchanger 116, 316 may also be coupled to the power source 102 and/or the downstream consumer 104.

With the HVAC system 100 assembled, the working fluid 118 flows as the low pressure and low temperature gas from the evaporator 114 to the cold tube system 150, 350, 450, 550 of the heat exchanger 116, 316, 416, 516, 616, 716. The working fluid 118 flows through the cold tube system 150, 350, 450, 550 of the heat exchanger 116, 316, 416, 516, 616, 716 and exits the cold tube system 150, 350, 450, 550 as the low pressure gas, with the fourth temperature range. From the cold outlet 122, 422, 522 of the heat exchanger 116, 316, 416, 516, 616, 716, the working fluid 118 enters the compressor inlet 120 and is compressed by the compressor 110 into the high pressure gas having the second temperature range. From the compressor outlet 124, the working fluid 118 enters the hot tube system 152, 452, 552. 652, 752 or the hot shell system 352. The working fluid 118 flows through the hot tube system 152, 452, 552, 652, 752 or the hot shell system 352 to the hot outlet 128, 428, 528 of the heat exchanger 116, 316, 416, 516, 616, 716. The flow of the working fluid 118 through the hot tube system 152, 452, 552, 652, 752 or the hot shell system 352 along with the flow of the working fluid 118 through the cold tube system 150, 350, 450, 550, 650, 750 creates a temperature gradient or temperature difference across the first thermoelectric generator 162, which results in the corresponding generation of electrical energy. The flow of the working fluid 118 through the hot tube system 152 or the hot shell system 352 also creates a temperature gradient or temperature difference across the second thermoelectric generator 196, which results in the corresponding generation of electrical energy. From the hot outlet 128, 428, 528 of the heat exchanger 116, 316, 416, 516, 616, 716, the working fluid 118 in the third temperature range flows to the throttling valve 112, where the temperature of the working fluid 118 is lowered to the first temperature range, and the pressure is reduced. The working fluid 118 also changes state from a gas to a liquid. The liquid working fluid 118 exits the throttling valve 112 and enters into the evaporator 114. The evaporator 114 changes the state of the working fluid 118 from a liquid to a gas at the first temperature range. From the evaporator 114, the working fluid 118 is directed to the cold tube system 150, 350, 450, 550, 650, 750 of the heat exchanger 116, 316, 416, 516, 616, 716. The evaporator blower 136 directs gas, such as air, through the evaporator 114, which generates cool air. The cool air may be transported, via ducting, to a consumer, such as a cabin of the vehicle.

Thus, the HVAC system 100 reduces heating, ventilation and air conditioning system complexity and weight by eliminating a condenser. In addition, during operation, the HVAC system 100 generates electrical energy, such as a direct current, via at least the first thermoelectric generator 162 and the second thermoelectric generator 196. The generation of the direct current by the heat exchanger 116, 316, 416, 516, 616, 716 reduces a load the HVAC system 100 places on the power source 102 of the vehicle 99, which may improve a range or performance of the vehicle 99.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

## Claims

1. A heating, ventilation, and air conditioning system, comprising:
an evaporator (114) configured to provide a working fluid in a gaseous state at a first temperature range and a first pressure;
a compressor (110) downstream from the evaporator and configured to provide the working fluid in the gaseous state at a second temperature range and a second pressure, the second temperature range greater than the first temperature range and the second pressure greater than the first pressure;
a heat exchanger (116) having a first tube system (150) and a second tube system (152), the first tube system including a first inlet (142) configured to receive the working fluid from the evaporator, a first outlet (122) configured to provide the working fluid to the compressor and a first tube (156) that connects the first inlet to the first outlet, the second tube system including a second tube (180) formed from an inner perimeter tube wall (182) spaced apart from an outer perimeter tube wall (184) to define a channel (186), the channel extending from a second inlet (126) to a second outlet (128), wherein the second inlet is configured to receive the working fluid from the compressor;
a first thermoelectric generator (164) coupled to an outer tube perimeter of the first tube (156) of the first tube system and to the inner tube perimeter wall (182) of the second tube (180) of the second tube system, the first thermoelectric generator configured to generate electrical energy based on a temperature difference between the first tube (156) and the second tube (180); and
a second thermoelectric generator (196) coupled to the outer perimeter tube wall (184) of the second tube (180).

2. The heating, ventilation, and air conditioning system of any one of the preceding claims, further comprising:
a throttling valve (112) downstream of the first thermoelectric generator (164) in a direction of a flow of the working fluid through the heating, ventilation, and air conditioning system, the throttling valve configured to receive the working fluid in a third temperature range, wherein the third temperature range is less than the second temperature range.

3. The heating, ventilation, and air conditioning system of Claim 2, wherein the throttling valve (112) is fluidly coupled to the evaporator (114) so as to be upstream from the evaporator in the direction of the flow of the working fluid through the heating, ventilation, and air conditioning system.

4. The heating, ventilation, and air conditioning system of any preceding claim, further comprising an outer exchanger housing (154) disposed about the second thermoelectric generator (196).

5. The heating, ventilation, and air conditioning system of Claim 4, wherein the outer exchanger housing includes at least one fin structure (206).

6. The heating, ventilation, and air conditioning system of Claim 4, further comprising a blower (136) configured to direct ambient air over the outer exchanger housing.

7. The heating, ventilation, and air conditioning system of any preceding claim, wherein the first tube system includes a first helical coiled tube, and the second tube system includes a second helical coiled tube, and the first thermoelectric generator is coupled about the first helical coiled tube.

8. The heating, ventilation, and air conditioning system of any of Claims 1 to 6, wherein the first tube system includes a first serpentine coiled tube, and the second tube system includes a second serpentine coiled tube, and the first thermoelectric generator is coupled about the second serpentine coiled tube.

## Patentansprüche

1. Heizungs-, Lüftungs- und Klimaanlagensystem, umfassend:
einen Verdampfer (114), der dazu konfiguriert ist, ein Arbeitsfluid in einem gasförmigen Zustand in einem ersten Temperaturbereich und mit einem ersten Druck bereitzustellen;
einen Kompressor (110), der nachgelagert von dem Verdampfer ist und dazu konfiguriert ist, das Arbeitsfluid in dem gasförmigen Zustand in einem zweiten Temperaturbereich und mit einem zweiten Druck bereitzustellen, wobei der zweite Temperaturbereich höher ist als der erste Temperaturbereich und der zweite Druck höher ist als der erste Druck;
einen Wärmetauscher (116), der ein erstes Rohrsystem (150) und ein zweites Rohrsystem (152) aufweist, wobei das erste Rohrsystem Folgendes beinhaltet: einen ersten Einlass (142), der dazu konfiguriert ist, das Arbeitsfluid von dem Verdampfer zu empfangen, einen ersten Auslass (122), der dazu konfiguriert ist, das Arbeitsfluid an den Kompressor bereitzustellen, und ein erstes Rohr (156), das den ersten Einlass mit dem ersten Auslass verbindet, wobei das zweite Rohrsystem ein zweites Rohr (180) beinhaltet das von einer Innenumfangsrohrwand (182) ausgebildet ist, die von einer Außenumfangsrohrwand (184) beabstandet ist, um einen Kanal (186) zu definieren, wobei sich der Kanal von einem zweiten Einlass (126) zu einem zweiten Auslass (128) erstreckt, wobei der zweite Einlass dazu konfiguriert ist, das Arbeitsfluid von dem Kompressor zu empfangen;
einen ersten thermoelektrischen Generator (164), der mit einem Außenrohrumfang des ersten Rohrs (156) des ersten Rohrsystems und mit der Innenrohrumfangswand (182) des zweiten Rohrs (180) des zweiten Rohrsystems gekoppelt ist, wobei der erste thermoelektrische Generator dazu konfiguriert ist, elektrische Energie auf Basis einer Temperaturdifferenz zwischen dem ersten Rohr (156) und dem zweiten Rohr (180) zu erzeugen; und
einen zweiten thermoelektrischen Generator (196), der mit der Außenumfangsrohrwand (184) des zweiten Rohr (180) gekoppelt ist.

2. Heizungs-, Lüftungs- und Klimaanlagensystem nach einem der vorhergehenden Ansprüche, ferner umfassend:
ein Drosselventil (112), das von dem ersten thermoelektrischen Generator (164) in einer Richtung einer Strömung des Arbeitsfluids durch das Heizungs-, Lüftungs- und Klimaanlagesystem nachgelagert ist, wobei das Drosselventil dazu konfiguriert ist, das Arbeitsfluid in einem dritten Temperaturbereich zu empfangen, wobei der dritte Temperaturbereich niedriger ist als der zweite Temperaturbereich.

3. Heizungs-, Lüftungs- und Klimaanlagensystem nach Anspruch 2, wobei das Drosselventil (112) fluidisch mit dem Verdampfer (114) gekoppelt ist, um so von dem ersten Verdampfer in der Richtung der Strömung des Arbeitsfluids durch das Heizungs-, Lüftungs- und Klimaanlagesystem vorgelagert zu sein.

4. Heizungs-, Lüftungs- und Klimaanlagensystem nach einem der vorhergehenden Ansprüche, ferner umfassend ein Tauscheraußengehäuse (154), das um den zweiten thermoelektrischen Generator (196) herum angeordnet ist.

5. Heizungs-, Lüftungs- und Klimaanlagensystem nach Anspruch 4, wobei das Tauscheraußengehäuse mindestens eine Lamellenstruktur (206) beinhaltet.

6. Heizungs-, Lüftungs- und Klimaanlagensystem nach Anspruch 4, ferner umfassend ein Gebläse (136), das dazu konfiguriert ist, Umgebungsluft über das Tauscheraußengehäuse zu lenken.

7. Heizungs-, Lüftungs- und Klimaanlagensystem nach einem der vorhergehenden Ansprüche, wobei das erste Rohrsystem ein erstes schraubenförmig gewundenes Rohr beinhaltet, und das zweite Rohrsystem ein zweites schraubenförmig gewundenes Rohr beinhaltet, und der erste thermoelektrische Generator um das erste schraubenförmig gewundene Rohr gekoppelt ist.

8. Heizungs-, Lüftungs- und Klimaanlagensystem nach einem der Ansprüche 1 bis 6, wobei das erste Rohrsystem ein erstes serpentinenförmig gewundenes Rohr beinhaltet, und das zweite Rohrsystem ein zweites serpentinenförmig gewundenes Rohr beinhaltet, und der erste thermoelektrische Generator um das zweite serpentinenförmig gewundene Rohr gekoppelt ist.

## Revendications

1. Système de chauffage, ventilation et climatisation, comprenant :
un évaporateur (114) configuré pour fournir un fluide de travail dans un état gazeux à une première plage de températures et une première pression ;
un compresseur (110) en aval de l'évaporateur et configuré pour fournir le fluide de travail dans l'état gazeux à une deuxième plage de températures et une deuxième pression, la deuxième plage de températures étant supérieure à la première plage de températures et la deuxième pression supérieure à la première pression ;
un échangeur de chaleur (116) ayant un premier système de tubes (150) et un deuxième système de tubes (152), le premier système de tubes incluant une première entrée (142) configurée pour recevoir le fluide de travail de l'évaporateur, une première sortie (122) configurée pour fournir le fluide de travail au compresseur et un premier tube (156) qui relie la première entrée à la première sortie, le deuxième système de tubes incluant un deuxième tube (180) formé à partir d'une paroi périphérique interne du tube (182) espacée d'une paroi périphérique externe du tube (184) pour définir un canal (186), le canal s'étendant d'une deuxième entrée (126) à une deuxième sortie (128), dans lequel la deuxième entrée est configurée pour recevoir le fluide de travail du compresseur ;
un premier générateur thermoélectrique (164) couplé à une périphérie de tube externe du premier tube (156) du premier système de tubes et à la paroi périphérique du tube interne (182) du deuxième tube (180) du deuxième système de tubes, le premier générateur thermoélectrique étant configuré pour générer de l'énergie électrique sur la base d'une différence de température entre le premier tube (156) et le deuxième tube (180) ; et
un deuxième générateur thermoélectrique (196) couplé à la paroi périphérique externe du tube (184) du deuxième tube (180).

2. Système de chauffage, ventilation et climatisation selon l'une quelconque des revendications précédentes, comprenant en outre :
une vanne d'étranglement (112) en aval du premier générateur thermoélectrique (164) dans une direction d'un flux du fluide de travail à travers le système de chauffage, ventilation et climatisation, la vanne d'étranglement étant configurée pour recevoir le fluide de travail dans une troisième plage de températures, dans lequel la troisième plage de températures est inférieure à la deuxième plage de températures.

3. Système de chauffage, ventilation et climatisation selon la revendication 2, dans lequel la vanne d'étranglement (112) est couplée fluidiquement à l'évaporateur (114) de sorte à être en amont de l'évaporateur dans la direction du flux du fluide de travail à travers le système de chauffage, ventilation et climatisation.

4. Système de chauffage, ventilation et climatisation selon une quelconque revendication précédente, comprenant en outre un carter externe d'échangeur (154) disposé autour du deuxième générateur thermoélectrique (196).

5. Système de chauffage, ventilation et climatisation selon la revendication 4, dans lequel le carter externe d'échangeur inclut au moins une structure à ailettes (206).

6. Système de chauffage, ventilation et climatisation selon la revendication 4, comprenant en outre un ventilateur (136) configuré pour diriger l'air ambiant sur le carter externe d'échangeur.

7. Système de chauffage, ventilation et climatisation selon une quelconque revendication précédente, dans lequel le premier système de tubes inclut un premier tube enroulé en hélice, et le deuxième système de tubes inclut un deuxième tube enroulé en hélice, et le premier générateur thermoélectrique est couplé autour du premier tube enroulé en hélice.

8. Système de chauffage, ventilation et climatisation selon l'une quelconque des revendications 1 à 6, dans lequel le premier système de tubes inclut un premier tube enroulé en serpentin, et le deuxième système de tubes inclut un deuxième tube enroulé en serpentin, et le premier générateur thermoélectrique est couplé autour du deuxième tube enroulé en serpentin.
